Europäisches Patentamt

European Patent Office

Office européen des brevets

(19)

(11) Publication number: **0 160 631**
**B1**

## EUROPEAN PATENT SPECIFICATION

(12)

(45) Date of publication of patent specification: **18.10.89**

(51) Int. Cl.[4]: **A 61 G 5/04,** B 60 B 19/12

(21) Application number: **85850146.3**

(22) Date of filing: **29.04.85**

(54) Four-wheel drive wheelchair.

(30) Priority: **01.05.84 US 605858**

(43) Date of publication of application:
**06.11.85 Bulletin 85/45**

(45) Publication of the grant of the patent:
**18.10.89 Bulletin 89/42**

(84) Designated Contracting States:
**DE FR GB SE**

(56) References cited:
**DE-C- 300 247**
**US-A-3 253 632**
**US-A-4 258 815**

**ENGINEERING IN MEDICINE, vol. 2, no. 2, April
1973, pages 32-40, London, GB; M.W. THRING:
"Mechanical aids for the disabled"**

(73) Proprietor: **Farnam, Jeffrey
3035 Humboldt Ave. So.
Minneapolis Minnesota 55408 (US)**

(72) Inventor: **Farnam, Jeffrey
3035 Humboldt Ave. So.
Minneapolis Minnesota 55408 (US)**

(74) Representative: **Ström, Tore et al
Ström & Gulliksson AB Studentgatan 1 P.O. Box
4188
S-203 13 Malmö (SE)**

Courier Press, Leamington Spa, England.

EP 0 160 631 B1

## Description

The present invention generally pertains to wheelchairs for the disabled and more particularly to a self-propelled four-wheel drive wheelchair for use by quadriplegic individuals.

Practical self-propelled wheelchairs were first made possible in the 1950's and 1960's, as practical and relatively inexpensive rechargeable battery technology became available. Since their introduction, numerous designs have been proposed to improve traction and maneuverability of the two-wheel drive self-propelled wheelchair, many of which involve elaborate "endless belt" drive systems, as for example shown in U.S. Patent 2,765,860 to Church, issued October 9, 1956; U.S. Patent 2,751,027 to McLaughlin, issued June 19, 1956; U.S. Patent 4,077,483 to Randolph, issued March 7, 1978; and U.S. Patent 4,119,163 to Ball, issued October 10, 1978. While each of the wheelchairs disclosed in those patents are relatively mobile and capable of negotiating obstacles, they are all characterized by elaborate designs implementing many components to carry the endless belts and provide the driving force thereto, and thus are relatively heavy or have a high degree of rolling friction. Thus, inordinate quantities of electrical energy are required to drive these chairs resulting in relatively limited range between battery recharge. In addition, they are difficult to transport, require relatively high levels of maintenance, and can be destructive of certain flooring materials, such as carpet, due to differential steering.

Thus, four-wheel drive endless belt wheelchairs have not been well accepted. For similar reasons, wheeled only four-wheel drive wheelchairs have also met with little success, as they too necessitate differential steering, for example as employed in a "bobcat" front-end loader, which like in the case of endless belt systems can impose an inordinate drain on the wheelchair batteries, and can be destructive of floor coverings. However, the maneuverability afforded by either endless belt or four-wheel drive does have advantages worth pursuing. For instance, four-wheel drive greatly enhances the climbing ability of the wheelchair, for example, to transverse small or low obstacles, and improves traction significantly on slippery or disintegrated surfaces, and relatedly improves braking ability, especially when proceeding down an incline.

The present invention provides a self-propelled four-wheel drive wheelchair of a relatively uncomplicated and lightweight design which overcomes the above-described problems with prior art four-wheel drive or endless belt wheelchairs. The wheelchair of the present invention provides a frame for supporting a seat and includes four wheels, two mounted on each side of the frame, front and back, for free rotation, to support the frame over the ground. The rear wheels are each comprised of a hub and tire means mounted therearound, while each of the front wheels are compound, comprising a hub with a plurality of smaller diameter wheels supported around the perimeter of the hub, with the axes of said smaller diameter wheels disposed parallel to the plane of rotation of said hub, so that said front wheels may roll substantially freely in a conventional manner, and in addition, laterally of the wheelchair. A pair of drive means are provided, one on each side of the wheelchair, with each drive means interconnecting the front and rear wheels on a side to turn in unison. The drive means are mounted to the frame below the seat on the opposite sides of the frame, and a power source for energizing said drive means is provided and also mounted to the frame below the seat. Control means are provided to permit the user seated in the wheelchair to control each of said drive means independently, so that the wheels on a side may be rotated either forward or backward, to permit said wheelchair to be steered by differential rotation of said wheels.

Thus, the present invention provides a wheelchair which includes the benefits of four-wheel drive but which enables the front end of the wheelchair to pivot or move laterally from side-to-side with little frictional resistance by the front wheels. In this manner, the wheelchair may be turned by application of far less power than in the case of an endless belt drive system or even a conventional four-wheel drive wheelchair with differential steering, and potential damage to the floor is also substantially avoided. These and other features of the invention are set forth in the ensuing specification and drawing.

FIG. 1 is a front perspective view of the wheel chair according to the present invention; and

FIG. 2 is a side perspective view of the wheel chair according to the present invention.

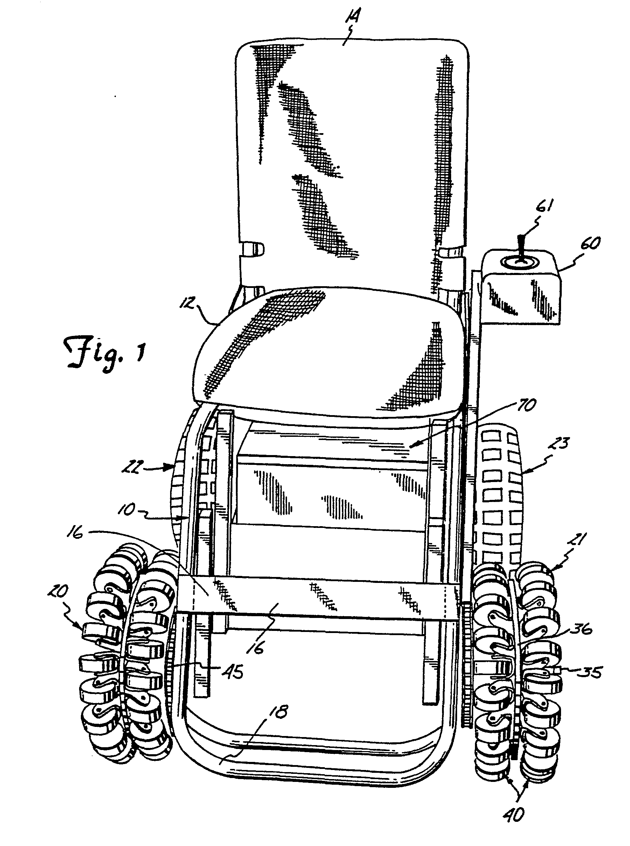

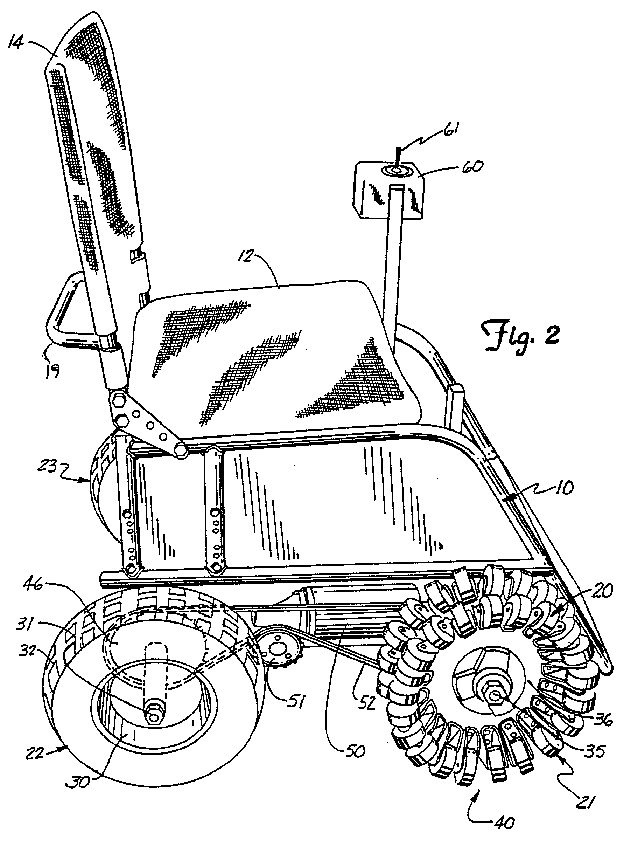

Referring to FIGS. 1 and 2, there is shown a front and side perspective view of the wheelchair according to the present invention. A frame generally designated 10, is provided to support a seat 12 and backrest 14, to support the user in an upright sitting position in the wheelchair. A leg support member 16 and footrest 18 are provided to support the user's legs and feet respectively. A push or pull bar 19 is provided to be used in conventional manner.

Frame 10 is supported over the ground for rolling movement by wheel assemblies 20-23. Each of rear wheel assemblies 22 and 23 are conventional in nature, and generally include, as shown with respect to wheel assembly 22, a hub member 30 which is mounted about a fixed axle 31 for free rotation with a ball-bearing assembly (not shown). An inflatable tire 32 is provided and mounted on hub 30, although it will be understood that a non-inflatable tire would also suffice.

As shown with respect to front wheel assembly 21 in FIG. 1 and front wheel assembly 20 in FIG. 2, each of these also include a hub member 36 mounted on a fixed axle 35 for free rotation by a ball-bearing assembly (not shown). Around the perimeter of hub 36 there is provided a plurality of smaller diameter "perimeter" wheels or rollers 40. Wheels 40 are mounted around the perimeter of hub 36 on opposite sides thereof, with the wheels on one side being staggered or offset by roughly one wheel's width along the arc of hub 36, in order to provide a substantially continuous bearing surface along the ground as the wheel rotates about axle 35. Each of wheels 40 are free to rotate about their respective axles in either direction parallel to axle 35. Thus, it may be readily appreciated that the front end of the wheelchair may be substantially freely pivoted or moved laterally from side-to-side, while at the same time, "compound" wheels 20 and 21 permit the wheelchair to be moved forward and backward in conventional manner.

Each of the hubs of wheel assemblies 20-23 has a sprocket member mounted thereto, as shown with respect to assemblies 20 and 22, which include sprockets 45 and 46 respectively, as seen in FIG. 2. A conventional motor drive assembly 50 is provided and is mounted generally to the frame 10, and includes an output drive sprocket 51. Motor drive assembly 50 may be controlled via controls 60 which includes a joystick-type control 61, which may be moved· in a conventional manner to cause sprocket 51 to rotate clockwise or counterclockwise by application of drive energy from assembly 50. A chain 52 is provided and is wrapped about sprockets 45 and 46 and up and over the top of sprocket 51, whereby drive power is transferred from sprocket 51 to wheels 20 and 22. Although not shown for the sake of clarity and brevity in the drawing, a functionally identical drive and sprocket assembly is provided and mounted on the other side of the frame 10 for movement of wheels 21 and 23, as controlled by controls 60. Further conventional control circuits cooperating with controls 60 to control the application of battery power to the drive motors, and rechargeable batteries 70 are mounted beneath seat 12 to the frame 10.

Thus, each of wheel assemblies 20 and 22, and 21 and 23 are rotated in unison by the respective drive assemblies, under the control of joystick 61, which provides that either pair be independently rotated clockwise or counterclockwise, (i.e., forward or backward), such that the wheelchair may be steered by differential application of drive power, in a manner conventional to two-wheel drive self-propelled wheelchairs. However, by virtue of the added degree of rolling movement of the front wheels 20 and 21, the wheelchair may be made to turn right and left using substantially less power than is required in the case where the front wheels are of a conventional design. Thus, four-wheel drive power may be provided without sacrificing the range necessary to make the wheelchair practical and usable. Furthermore, and perhaps more importantly, the wheelchair of the present invention turns substantially freely and smoothly from side to side by rolling on the perimeter wheels, permitting the wheelchair to be used indoors without marring or damaging floor coverings.

While the front wheels 20 and 21 have been shown as constructed with fixedly mounted castor-like wheels, it is contemplated that many other designs which provide for the additional freedom of lateral movement of the front end of the wheelchair are possible, and it should be understood that the invention is in no way limited to the particular embodiment of wheels 20 and 21 shown in the drawing. Furthermore, it is contemplated, although not believed to be preferred, that the multidirectional wheels be utilized on the rear of the chair with conventional wheels in front. Moreover, as may be readily evident, the four-wheel drive system of the present invention may be practiced outside of the wheelchair art in the vehicular art in general.

While the present invention has been described herein in its preferred form, it is in no way limited thereto, as various changes or modification to the disclosed embodiment may be made without departing from the scope of the invention, as is defined in the claims appended hereto.

## Claims

1. A four-wheel drive vehicle, such as a wheelchair, comprising a frame and a pair of rear wheels mounted on opposite sides of said frame for supporting the rear end thereof, a pair of front wheels mounted on opposite sides of said frame for supporting the front end thereof, each of said wheels being capable of rotating in a plane parallel to the side of a said frame in a conventional manner, a seat for supporting a user on the frame, and user controlled drive means connecting said front and rear wheels on each side and permitting said vehicle to be steered differentially, characterized in that said pair of front wheels only comprise compound-wheels including roller means positioned about the perimeter thereof to permit each of the compound-wheels to roll on said roller means in a substantially transverse direction to said plane, and providing a substantially continuous ground contacting surface to permit the front end of the vehicle to move laterally on said roller means as well forward and backward in a conventional manner by rotation of the front wheels in said plane.

2. The vehicle of claim 1 wherein each of the front compound-wheels includes a hub member mounted for free rotation about an axis transverse to the frame and wherein each of the roller means is mounted for rotation about an axis oriented generally transverse to the hub axis.

3. The vehicle of claim 2 wherein a plurality of roller means are mounted around the perimeter of the hub on opposite sides thereof, and wherein the roller means mounted on one side of the hub are staggered along the arc of the hub relative to the roller means mounted on the other side to provide said substantially continuous ground contacting surface.

## Patentansprüche

1. Fahrzeug mit Vierradantrieb, wie ein Rollstuhl, welches einen Rahmen und ein paar Hinterräder, die auf entgegengesetzten Seiten des Rahmens befestigt sind, um dessen Rückseite zu tragen, ein paar Vorderräder, die auf entgegengesetzten Seiten des Rahmens befestigt sind, um dessen Vorderseite zu tragen, wobei sich jedes der Räder auf nerkömmliche Weise in einer Ebene drehen kann, die zur Seite des Rahmens parallel ist, einen Sitz, um den Benutzer auf dem Rahmen zu tragen, und einen vom Benutzer geregelten Antriebsmechanismus umfaßt, der die Vorder- und die Hinterräder auf jeder Seite verbindet und die unterschiedliche Steuerung des Fahrzeuges gestattet, dadurch gekennzeichnet, daß das Vorderradpaar nur Verbundräder umfaßt, die auf deren Umfang angeordnete Laufrollen umfassen, damit jedes der Verbundräder auf den Laufrollen in einer Richtung rollen kann, die im wesentlichen quer zu der Ebene ist, und eine im wesentlichen durchgängige Bodenkontaktoberfläche geschaffen wird, damit sich die Vorderseite des Fahrzeuges durch Rotation der Vorderräder in der Ebene in herkömmlicher Weise auf den Laufrollen seitlich als auch vorwärts und rückwärts bewegen kann.

2. Fahrzeug nach Anspruch 1, worin jedes der vorderen Verbundräder eine Radnabe umfaßt, die zur freien Rotation um eine Achse quer zum Rahmen befestigt ist, und worin jede der Laufrollen zur Rotation um eine Achse befestigt ist, die im allgemeinen quer zur Achse der Radnabe orientiert ist.

3. Fahrzeug nach Anspruch 2, worin um den Umfang der Radnabe auf deren entgegengesetzten Seiten eine Vielzahl von Laufrollen befestigt ist, und worin die auf einer Seite der Radnabe befestigten Laufrollen entlang des Bogens der Radnabe in Bezug auf die Laufrollen, die auf der anderen Seite befestigt sind, versetzt sind, um die im wesentlichen durchgängige Bodenkontaktoberfläche zu schaffen.

**Revendications**

1. Un véhicule à quatre roues motrices, tel qu'un fauteuil roulant, comprenant un châssis et une paire de roues arrières montée sur les côtés opposés dudit châssis pour supporter l'extrémité arrière de celui-ci, une paire de roues avant montée sur les côtés opposés dudit châssis pour supporter l'extrémité avant de celui-ci, chacune desdites roues pouvant tourner en un plan parallèle au côté dudit châssis d'une manière conventionnelle, un siège pour supporter un utilisateur sur le châssis, et des moyens d'entraînement commandé par l'utilisateur reliant lesdites roues avant et arrière sur chaque côté et permettant audit véhicule d'être guidé de façon différentielle, caractérisé en ce que ladite paire de roues avant présente seulement des roues composées comprenant des moyens de roulement positionnés sur le périmètre de celles-ci pour permettre à chacune des roues composées de tourner sur lesdits moyens de roulement dans une direction sensiblement transversale audit plan, et procurant une surface touchant le sol sensiblement continue pour permettre à l'extrémité avant du véhicule de se déplacer de façon latérale sur lesdits moyens de roulement aussi bien vers l'avant que vers l'arrière d'une manière conventionnelle par rotation des roues avant dans ledit plan.

2. Le véhicule de la revendication 1 dans lequel chacune des roues avant composées comprend un élément de moyeu monté pour tourner librement autour d'un axe transversal au châssis et dans lequel chacun des moyens de roulement est fixé à rotation sur un axe orienté généralement de façon transversale à l'axe de moyeu.

3. Le véhicule de la revendication 2 dans lequel une pluralité de moyens de roulement est montée autour du périmètre du moyeu sur les côtés opposés de celui-ci, et dans lequel les moyens de roulement montés sur un côté du moyeu sont échelonnés le long de l'arc du moyeu par rapport aux moyens de roulement montés sur l'autre côté pour constituer de manière pratiquement continue ladite surface de contact avec le sol.

*Fig. 1*

EP 0 160 631 B1

Fig. 2